# FASCICULE DE BREVET EUROPEEN

(11) **EP 0 520 974 B1**
(45) Date de publication et mention de la délivrance du brevet: **17.07.1996**
(21) Numéro de dépôt: 92870093.9
(22) Date de dépôt: 25.06.1992
(51) Int. Cl.: A01C 23/02

(54) **Répartiteur de lisier et autres liquides**
Verteiler von Düngern und anderen Flüssigkeiten
Distributor for liquid manure and similar liquids

(30) Priorité: 25.06.1991 BE 9100611
(43) Date de publication de la demande: 30.12.1992
(73) Titulaire: ETS JOSKIN S.A., B-4630 Soumagne (BE)
(72) Inventeur: Joskin, Victor, B-4630 Soumagne (BE)
(74) Mandataire: Vanderperre, Robert

(56) Documents cités:
- DE-A- 3 410 338
- DE-A- 4 021 266
- FR-A- 2 325 312
- US-A- 3 152 431

## Description

La présente invention concerne les répartiteurs, en particulier de lisier, destinés à couper toutes les particules fibreuses, comme la paille et l'ensilage qui se trouvent dans le lisier.

On connaît divers systèmes de répartiteurs de lisier de ce type, par FR-A-2 325 312 par exemple, qui comportent une plaque fixe pourvue d'une série de trous vers sa périphérie, mais aucun d'eux ne permet de couper la paille, l'herbe et autres déchets fibreux dans le liquide même à injecter.

L'objet de l'invention réside, d'une part, dans un système de répartition du lisier à l'intérieur du répartiteur et, d'autre part, dans un système de coupe à l'intérieur même du répartiteur.

Un répartiteur de lisier suivant l'invention comporte une plaque fixe pourvue vers sa périphérie d'une série de trous et une deuxième plaque coaxiale, superposée à la plaque fixe et montée de manière à pouvoir tourner, cette deuxième plaque portant sur sa face inférieure, vers sa périphérie, une série de disques fous et coupants venant en contact de frottement avec la plaque fixe au-dessus des trous.

Suivant l'invention le répartiteur consiste en une boîte coupante et distributrice, présentant une ouverture supérieure pour l'alimentation par pression et des ouvertures inférieures pour la sortie vers un distributeur approprié, et comportant, d'une part, sur son fond la plaque fixe pourvue des trous correspondant aux ouvertures de sortie et, d'autre part, la plaque tournante surmontant la plaque fixe et supportant la série de disques fous et coupants faisant saillie en dehors de ladite plaque pour recouvrir les trous de la plaque fixe.

L'invention est décrite plus en détail ci-après sur base des dessins schématiques annexés, montrant à titre d'exemple uniquement, en :
Figure 1, une vue en coupe d'un répartiteur suivant l'invention ;

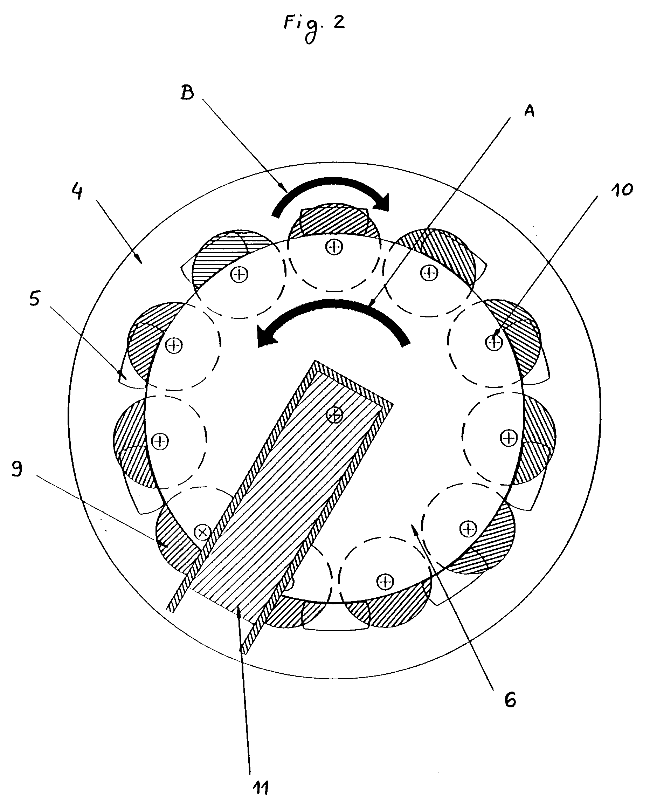

Figure 2, une vue en plan de l'intérieur du répartiteur de la figure 1, et

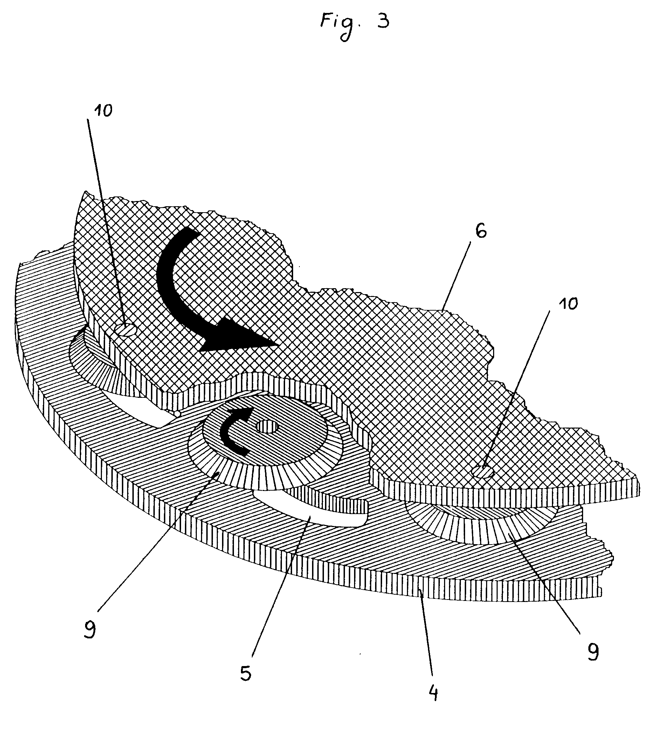

Figure 3, une vue partielle en perspective schématisant le mouvement du répartiteur.

Comme on le voit aux dessins, le répartiteur consiste en une boîte 1, coupante et distributrice, avec une ouverture supérieure 2 pour l'alimentation par pression et des ouvertures inférieures 3 pour la sortie du lisier vers un injecteur ou autre système de distribution.

La boîte 1 renferme sur son fond une plaque fixe 4 pourvue d'une série de trous 5 coïncidant avec les ouvertures de sortie 3. Cette plaque 4 est surmontée d'une plaque plus petite 6 susceptible d'être mise en rotation par l'axe 7 d'un hydromoteur 8. Sous la plaque tournante 6 sont montés des disques fous et coupants 9 par l'intermédiaire d'axes 10 en faisant saillie en dehors de ladite plaque. Ces disques fous et coupants 9 sont en contact de frottement par leur tranchant avec la plaque fixe 4 et recouvrent les trous 5 de ladite plaque, dont les parois servent de contre-couteau.

Sur la plaque tournante 6 et sous l'ouverture d'alimentation 2 est disposé un canal de distribution 11 en U qui, tournant avec ladite plaque, distribue le lisier sur la plaque fixe 4.

Le lisier ou tout autre liquide est poussé dans le répartiteur 1 à travers l'ouverture 2. La plaque 6 est mise en rotation et entraîne le canal de distribution 11 et les disques fous et coupants 9. Le canal tournant 11 distribue le lisier avec une certaine pression devant les trous 5 de la plaque fixe 4. Par frottement les disques 9 tournent sur eux-mêmes et coupent les corps étrangers-fibreux comme par des ciseaux entre leur tranchant et le contre-couteau des trous 5. Le lisier et les déchets fibreux coupés sortent par les ouvertures 3 vers un injecteur de lisier, par exemple.

La forme donnée au répartiteur en général et aux plaques fixe et tournante en particulier est avantageusement mais pas nécessairement ronde. Les trous dans la plaque fixe ont une forme choisie appropriée et par exemple une forme de boutonnière.

Avec un répartiteur de lisier ou autre liquide suivant l'invention on évite toute obstruction des tuyauteries d'alimentation de l'injecteur ou autre distributeur.

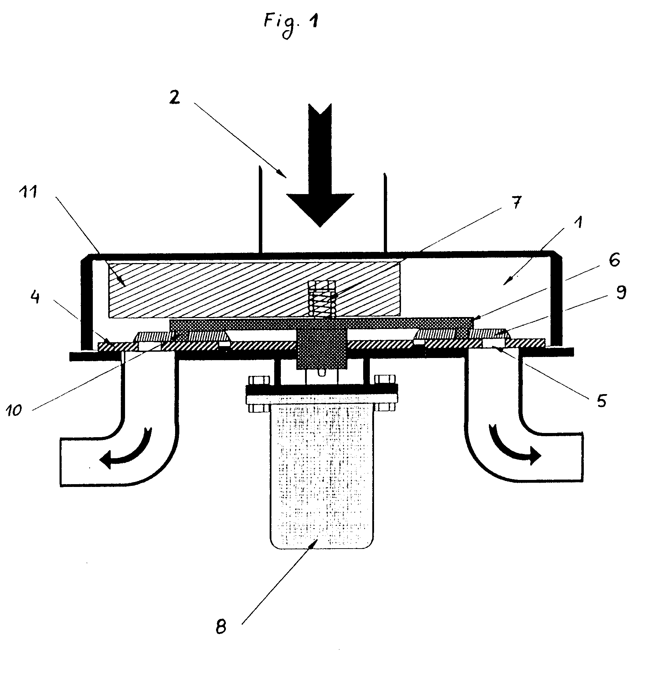

Le lisier ou autre liquide étant envoyé dans le répartiteur sous pression, il est bien entendu que ce dernier peut se présenter sous une position inversée, représentée par exemple par la figure 1 tournée de 180°.

## Revendications

1. Répartiteur de lisier et autres liquides, comportant une plaque fixe (4) pourvue vers sa périphérie d'une série de trous (5), caractérisé en ce qu'il comporte une deuxième plaque (6) de dimension réduite, coaxiale et superposée à la plaque fixe (4) et montée de manière à pouvoir tourner, cette deuxième plaque (6) portant sur sa face inférieure, vers sa périphérie, une série de disques fous et coupants (9) venant en contact de frottement avec la plaque fixe (4) au-dessus des trous (5).

2. Répartiteur suivant la revendication 1, caractérisé en ce qu'il consiste en une boîte (1) coupante et distributrice, présentant une ouverture supérieure (2) pour l'alimentation par pression et des ouvertures inférieures (3) pour la sortie vers un distributeur approprié, et comportant, d'une part, sur son fond la plaque fixe (4) pourvue des trous (5) correspondant' aux ouvertures de sortie (3) et, d'autre part, la plaque tournante (6) surmontant la plaque fixe (4) et supportant la série de disques fous et coupants (9) faisant saillie en dehors de ladite plaque (6) pour recouvrir les trous (5) de la plaque fixe (4).

3. Répartiteur suivant l'une quelconque des revendications 1 et 2, caractérisé en ce que les disques fous et coupants (9), montés sous la plaque tournante (6) par l'intermédiaire d'un axe (10), sont en contact avec la plaque fixe (4), de manière à être entraînés par frottement en rotation lors de la rotation de la plaque tournante (6).

4. Répartiteur suivant l'une quelconque des revendications 1 à 3, caractérisé en ce qu'un canal de distribution (11), disposé sous l'ouverture d'alimentation (2), est monté sur la plaque tournante (6) et tourne avec celle-ci pour une répartition sur la plaque fixe (4).

5. Répartiteur suivant la revendication 3, caractérisé en ce que les disques fous et coupants (9) sont en contact de frottement avec la plaque fixe (4) par leur tranchant et en ce que les parois des trous (5) de ladite plaque (4) servent de contre-couteau.

## Claims

1. A distributor for liquid manure and similar liquids, comprising a stationary plate (4) having a series of holes (5) at its periphery, characterised in that it comprises a second plate (6) of reduced dimension, that is coaxial and superposed on the stationary plate (4) and is mounted so as to be capable of rotation, said second plate (6) carrying on its under side, at its periphery a series, of free cutting discs (9) coming into frictional contact with the stationary plate (4) above said holes (5).

2. A distributor as recited in claim 1, characterised in that it consists in a cutting and distributing box (1) having an upper opening (2) for pressure feeding and lower openings (3) for the outlet towards a proper distributor, and comprising, on the one hand, on the bottom thereof the stationary plate (4) having holes (5) in registry with the outlet openings (3) and, on the other hand, the rotary plate (6) that is mounted above the stationary plate (4) and bears the set of free and cutting discs (9) which extend outwardly of the said plate (6) so as to cover the holes (5) in the stationary plate (4).

3. A distributor as recited in either of claims 1 and 2, characterised in that the free and cutting discs (9) that are mounted under the rotary plate (6) by means of an axis (10), are in contact with the stationary plate (4) so as to be frictionally driven into rotation when the rotary plate (6) is being rotated.

4. A distributor as recited in either of claims 1 to 3, characterised in that a distribution channel (11) positioned under the feeding opening (2) is mounted on the rotary plate (6) and is rotating therewith for ensuring distribution on the stationary plate (4).

5. A distributor as recited in claim 3, characterised in that the free and cutting discs (9) are in frictional contact with the stationary plate (4) by their cutting edge and in that the walls of said holes (5) in the said plate (4) serve as bedknives.

## Patentansprüche

1. Verteiler für Dünger und andere Flüssigkeiten, mit einer festen Platte (4), die an ihrer Peripherie mit einer Reihe von Löchern (5) versehen ist, **dadurch gekennzeichnet, daß** eine zweite Platte (6) mit verringerten Dimensionen vorgesehen ist, die koaxial zur festen Platte (4) und oberhalb derselben liegt und so montiert ist, daß sie sich drehen kann, wobei die zweite Platte (6) an ihrer Unterseite zur Peripherie hin eine Reihe von beweglichen Schneidplatten (9) trägt, die in Reibkontakt mit der festen Platte (4) oberhalb der Löcher (5) kommen.

2. Verteiler nach Anspruch 1, **dadurch gekennzeichnet, daß** er aus einem Schneid- und Verteilbehälter (1) besteht, der eine obere Öffnung (2) zur Druckversorgung zeigt sowie untere Öffnungen (3) zum Austritt in Richtung eines geeigneten Distributors und der einerseits an seinem Boden die feste Platte (4) umfaßt, die mit Öffnungen (5) versehen ist, welche mit den Austrittsöffnungen (3) korrespondieren und andererseits die drehende Platte (6), die oberhalb der festen Platte (4) montiert ist und die die Reihe von beweglichen Schneidscheiben (9) hält, welche über diese Platte (6) hinausstehen, um die Löcher (5) der festen Platte (4) zu überdecken.

3. Verteiler nach Anspruch 1 oder 2, **dadurch gekennzeichnet, daß** die beweglichen Schneidscheiben (9), die unterhalb der drehenden Platte (6) mittels einer Achse (10) montiert sind, in Kontakt mit der festen Platte (4) stehen, so daß sie entsprechend der Rotation der drehenden Platte (6) durch Reibung in Rotation versetzt werden.

4. Verteiler nach einem der Ansprüche 1 bis 3, **dadurch gekennzeichnet, daß** auf der drehenden Platte (6) ein Distributionskanal (11) montiert ist, der unterhalb der Versorgungsöffnung (2) angeordnet ist und der sich zur Verteilung auf der festen Platte (4) mit der drehenden Platte (6) dreht.

5. Verteiler nach Anspruch 3, **dadurch gekennzeichnet, daß** die beweglichen Schneidscheiben (9) für den Schneidvorgang in Reibkontakt mit der festen Platte (4) stehen, und dadurch daß die Wandungen der Löcher (5) der Platte (4) als Gegenschneide dienen.
